**Europäisches Patentamt**

**European Patent Office**

**Office européen des brevets**

(19)

(11) Veröffentlichungsnummer : **0 123 730**
**B1**

(12) **EUROPÄISCHE PATENTSCHRIFT**

(45) Veröffentlichungstag der Patentschrift :
21.01.87

(51) Int. Cl.⁴ : **F 16 D 65/58**

(21) Anmeldenummer : **83112737.8**

(22) Anmeldetag : **17.12.83**

(54) Vorrichtung zur Nachstellung von Bremsbelägen.

(30) Priorität : 26.03.83 DE 3311147

(43) Veröffentlichungstag der Anmeldung :
07.11.84 Patentblatt 84/45

(45) Bekanntmachung des Hinweises auf die Patenterteilung : 21.01.87 Patentblatt 87/04

(84) Benannte Vertragsstaaten :
DE FR GB IT

(56) Entgegenhaltungen :
DE-A- 2 530 930
GB-A- 2 103 738
US-A- 2 268 516

(73) Patentinhaber : Alfred Teves GmbH & Co. OHG
Müller-Strasse 4-14
D-5275 Bergneustadt (DE)

(72) Erfinder : Dettmer, Karl
Waldweg 6
D-5960 Olpe (DE)
Erfinder : Krumme, Klaus
Wilhelmstrasse 11
D-5275 Bergneustadt (DE)

(74) Vertreter : Grau, Ulf et al
c/o ALFRED TEVES GMBH Guerickestrasse7
D-6000 Frankfurt (M) 90 (DE)

## Beschreibung

Die Erfindung betrifft eine Vorrichtung zur Nachstellung von Bremsbelägen in einer Reibungsbremse, insbesondere einer Kraftfahrzeug-Trommelbremse, bei der die Nachstellung selbsttätig in Abhängigkeit vom Belagverschleiß erfolgt, bei der zwischen den Belagträgern eine Druckstrebe eingesetzt ist, die einerseits federnd gegen einen Belagträger gehalten ist, und die andererseits mit Spiel in den anderen Belagträger eingreift, und bei der ein durch die Druckstrebe schwenkbarer, von einer Feder beaufschlagter Nachstellnocken vorgesehen ist, durch den die wirksame Länge der Druckstrebe veränderbar ist.

Eine Vorrichtung mit den vorstehenden Merkmalen ist aus der DE-A-2 530 930 bekannt. Bei der bekannten Vorrichtung ist die Druckstrebe zweiteilig ausgeführt, wobei ein erstes Teil durch eine Zugfeder in Anlage an einen Belagträger eines ersten Bremsbelags gehalten ist. Ein zweites Teil der Druckstrebe greift mit einem Fortsatz mit Spiel in einen Belagträger einer zweiten Bremsbacke ein und ist axial beweglich zum ersten Teil der Druckstrebe geführt. Am ersten Teil der Druckstrebe ist ferner ein Nachstellnocken gelagert, der durch eine am zweiten Teil der Druckstrebe angreifende Druckfeder schwenkbar ist und bei einer derartigen Schwenkbewegung eine Änderung der wirksamen Länge der Druckstrebe herbeiführt.

Bei Bremsbetätigung ist die beschriebene Vorrichtung unwirksam, solange der Belagverschleiß ein bestimmtes Maß nicht überschritten hat. Wird die Trommelbremse bei fortgeschrittenem Belagverschleiß betätigt, so wird schließlich das Spiel zwischen dem zweiten Teil der Druckstrebe und einem Belagträger überwunden, so daß das zweite Teil der Druckstrebe sich in Richtung einer Bremsbacke bewegt, wobei eine Relativverschiebung zwischen dem ersten und dem zweiten Teil der Druckstrebe einsetzt. Dies führt dazu, daß der Einstellnocken geschwenkt wird, so daß sich die wirksame Länge der Druckstrebe vergrößert.

Die bekannte Vorrichtung hat den Nachteil, daß es bei dieser nach längerer Betriebszeit in der Regel außerordentliche Schwierigkeiten bereitet, die Bremstrommel vom Bremsträger, beispielsweise zum Zwecke des Belagwechsels, abzuziehen, da die Bremsbeläge in die Bremsfläche der Trommel Vertiefungen bzw. Riefen eingeschliffen haben, an deren Flanken die Bremsbeläge beim Abziehvorgang anstoßen. In derartigen Fällen ist es notwendig, das Lüftspiel zwischen Bremsbelag und Trommel-Bremsfläche durch Rückstellen der Nachstellvorrichtung vor dem Abziehvorgang zu vergrößern um ein Anstoßen der Bremsbeläge an den Flanken der Riefen auszuschließen. Ein solcher Rückstellvorgang ist jedoch nur unter größten Schwierigkeiten zu bewerkstelligen.

Der vorliegenden Erfindung liegt daher die Aufgabe zugrunde, eine Vorrichtung zur selbsttätigen Nachstellung von Bremsbelägen der eingangs genannten Gattung zu schaffen, bei dem ein eng bemessenes Bremslüftspiel unabhängig von der thermisch bedingten Ausdehnung der Bremstrommel eingestellt wird und bei der die Rückstellung der Belagträger und des Nachstellnockens ohne ein Abziehen der Bremstrommel bewirkt werden kann. Der Vorgang des Rückstellens des Bremsnockens soll außerdem außerordentlich bequem und rasch erfolgen können, so daß die Wartung der Bremse preiswert durchführbar ist und auch keine besonderen Fachkenntnisse beim Reparateur voraussetzt.

Erfindungsgemäß wird dies dadurch erreicht, daß der Nachstellnocken auf einem Bolzen gelagert ist, der in einem im Belagträger vorgesehenen, sich parallel zur Längsachse der Druckstrebe erstreckenden Langloch verschiebbar ist und der auf der der Bremsträgerplatte zugekehrten Seite mit einem den Bolzen verlängernden Fortsatz ausgestattet ist, wobei die Bremsträgerplatte im Bereich des Fortsatzes eine Öffnung aufweist, durch die das Ende eines Hebels mit dem Fortsatz in Eingriff bringbar ist.

Anstelle eines besonders geformten und in seinen Abmessungen auf die Vorrichtung abgestimmten Hebels ist ohne weiteres ein handelsübliches Werkzeug, beispielsweise ein Schraubendreher verwendbar.

Vorzugsweise sind der Fortsatz und der Hebel einteilig ausgebildet, wobei sich der Hebel in einer Ebene quer zur Druckstrebe durch die Öffnung in der Bremsträgerplatte hindurch nach außen zu hindurch erstreckt.

In einer bevorzugten Ausführungsform ist der Hebel mit dem Fortsatz über ein Gelenk verbunden, wobei sich das freie Ende des Hebels durch die Öffnung in der Bremsträgerplatte nach außen zu hindurch erstreckt.

Die Erfindung läßt die verschiedensten Ausführungsmöglichkeiten zu, eine davon ist in den anhängenden Zeichnungen schematisch näher dargestellt und zwar zeigen :

Figur 1 eine Nachstellvorrichtung an einer Trommelbremse in der Seitenansicht,

Figur 2 einen Ausschnitt der Vorrichtung nach Fig. 1 in einer Draufsicht und

Figur 3 eine weitere Ansicht eines Teiles der Vorrichtung nach Fig. 1.

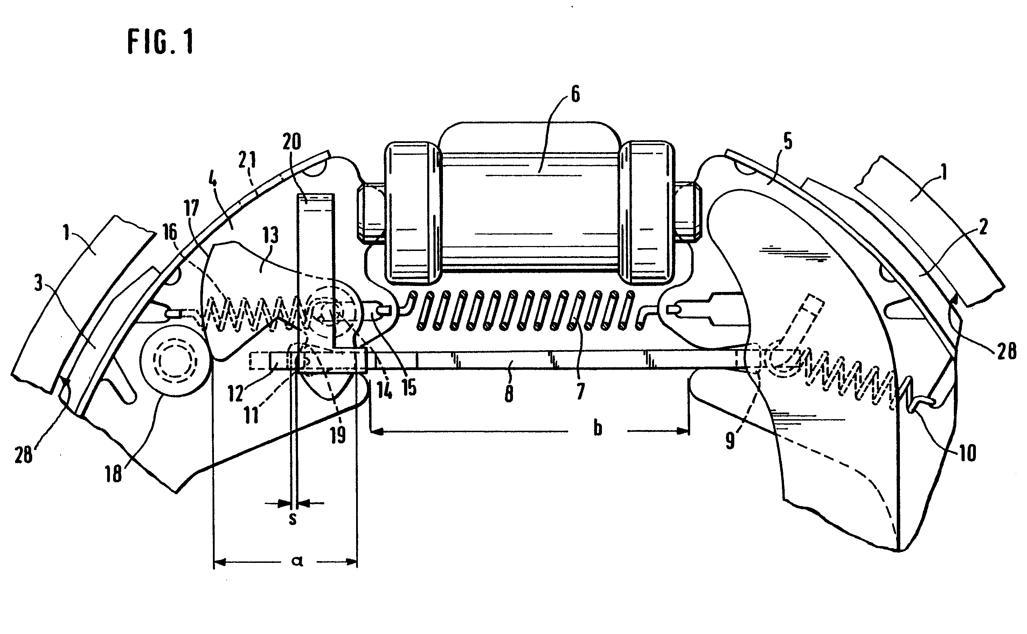

In Fig. 1 ist mit 1 eine Bremstrommel bezeichnet, in der Bremsbeläge 2, 3 angeordnet sind, die ihrerseits auf Belagträgern 4, 5 befestigt sind. Es ist ferner mit 6 ein Radzylinder bezeichnet, dessen Kolben an den Belagträgern 4, 5 zur Anlage gelangt und bei Druckbeaufschlagung die Bremsbeläge 2, 3 an die Bremstrommel 1 preßt. In der Bremslösestellung werden die Belagträger 4, 5 mit den Reibbelägen 2, 3 durch eine Zugfeder 7 in Anlage an den Kolben des Radzylinders 6 gehalten, so daß sich ein gewisses Bremslüftspiel s zwischen der Bremstrommel 1 und den Bremsbelägen 2, 3 einstellt.

Zwischen den Belagträgern 4, 5 befindet sich eine Druckstrebe 8, deren in der Darstellung rechtes Ende in eine Ausnehmung 9 des Belagträgers 5 eingreift und durch eine Zugfeder 10 in Anlage am Belagträger 5 gehalten wird. Das in der Darstellung linke Ende der Druckstrebe 8 greift ebenfalls in eine Ausnehmung 11 des Belagträgers 4 ein, wobei ein abgewinkelter Steg 12 der Druckstrebe 8 einen Nachstellnocken 13 hintergreift.

Der Nachstellnocken 13 ist mittels eines Bolzens 14 in einem Langloch 15 des Belagträgers 4 gehalten und geführt und wird durch eine Zugfeder 16 mit der Fläche 17 gegen einen Anschlag 18 am Bremsträger 4 vorgespannt. Der abgewinkelte Steg 12 der Druckstrebe 8 befindet sich in der in Fig. 1 dargestellten Bremslösesellung in einem Abstand s vom Nachstellnocken 13. In den Zwischenraum zwischen dem abgewinkelten Steg 12 und dem Nachstellnocken 13 greift ein Abstandselement 19 ein, das Bestandteil einer Bimetallfeder 20 ist, die mit der Druckstrebe 8 verbunden ist. Im Belagträger 4 befindet sich eine Aussparung 21, durch die ein Wärmeaustausch zwischen der Bimetallfeder 20 und der Bremstrommel 1 erfolgen kann.

Wird bei einer Bremsbetätigung der Radzylinder 6 druckbeaufschlagt, so werden die Belagträger 4, 5 mit den Bremsbelägen 2, 3 gegen die Spannung der Zugfeder 7 an der Bremstrommel 1 zur Anlage gebracht, wobei das in der Darstellung rechte Ende der Druckstrebe 8 infolge der Zugfeder 10 in Anlage am Belagträger 5 verbleibt. Die Druckstrebe 8 mit dem abgewinkelten Steg 12 verschiebt sich dabei unter Verkleinerung des Abstandes s in der Ausnehmung 11 des Belagträgers 4. Der Abstand s wird mit fortschreitendem Belagverschleiß bei Bremsbetätigung ständig kleiner, bis der abgewinkelte Steg 12 der Druckstrebe 8 schließlich über das Abstandselement 9 am eine Auflauframpe bildenden Nachstellnocken 13 zur Anlage gelangt und den Nachstellnocken im Gegenuhrzeigersinn schwenkt, wobei die Fläche 17 des Nachstellnockens 13 gegenüber dem Anschlag 18 eine andere Relativlage einnimmt. Die Fläche 17 des Nachstellnockens 13 und der Anschlag 18 sind derart ausgebildet, daß die Fläche 17 sich zwar in der beschriebenen Weise gegenüber dem Anschlag 18 verschieben kann, eine Rückstellung aber verhindert ist. Eine derartige Veränderung der Relativlage zwischen der Fläche 17 des Nachstellnockens 13 und dem Anschlag 18 hat aber zur Folge, daß die wirksame Länge der Druckstrebe 8 vergrößert wird, so daß sich stets ein gleichbleibendes Lüftspiel zwischen der Bremstrommel 1 und den Bremsbelägen 2, 3 einstellt.

Bei stärkerer Erwärmung der Bremstrommel 1 erfolgt eine entsprechende Vergrößerung ihres Innendurchmessers, was dazu führt, daß die Belagträger 4, 5 mit den Bremsbelägen 2, 3 einen größeren Weg ausführen müssen, bevor sie an der Bremstrommel 1 zur Anlage kommen. Die Temperatur der Bremstrommel 1 wirkt aber gleichzeitig durch die Aussparung 21 im Belagträger 4 auf die Bimetallfeder 20 ein, die sich dadurch derart verformt, daß das Abstandselement 19 aus dem Abstand zwischen dem abgewinkelten Steg 12 der Druckstrebe 8 und dem Nachstellnocken 13 vorausgeschwenkt wird, so daß das in der Darstellung linke Ende der Druckstrebe 8 eine größere Relativverschiebung in der Ausnehmung 1 des Belagträgers 4 ausführen muß, bevor der abgewinkelte Steg 12 am Nachstellnocken 13 zur Anlage gelangt und die wirksame Länge der Druckstrebe 8 in der bereits beschriebenen Weise vergrößert wird. Die wirksame Länge der Druckstrebe 8 wird also bei hohen Temperaturen der Bremstrommel 1 zunächst beibehalten, wodurch sichergestellt ist, daß sich auch nach dem Erkalten der Bremstrommel 1 ein ausreichendes Bremslüftspiel einstellt.

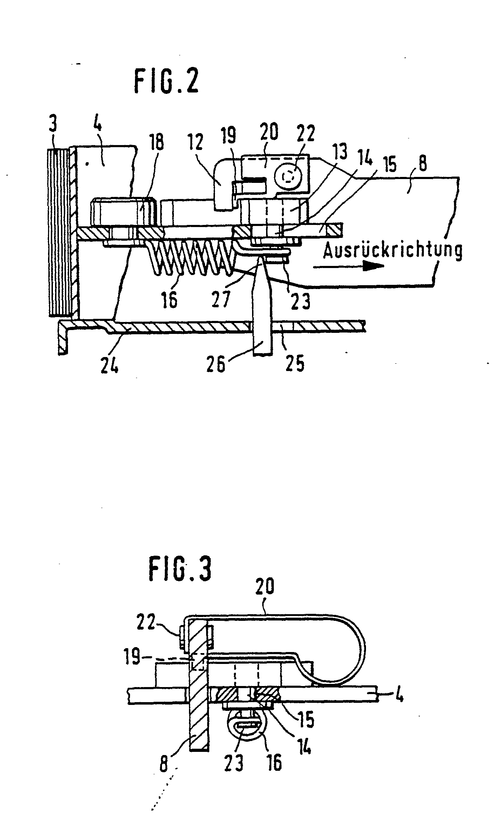

In Fig. 2 ist das gemäß Fig. 1 linke Ende der Druckstrebe 8 in der Draufsicht dargestellt. Fig. 2 zeigt das Abstandselement 19 der Bimetallfeder 20 im eingerückten Zustand, in dem es zwischen dem abgewinkelten Steg 12 der Druckstrebe 8 und dem Einstellnocken 13 wirksam ist. Wenn sich die Temperatur der Bremstrommel 1, die in Fig. 2 nicht erkennbar ist, stark erhöht, so wird die Bimetallfeder 20 derart verformt, daß das Abstandselement 19 gemäß Fig. 2 nach oben geschwenkt wird, wodurch der abgewinkelte Steg 12 insgesamt einen größeren Weg zurücklegen muß, bevor am Nachstellnocken 13 zur Anlage kommt und eine Vergrößerung der wirksamen Länge der Druckstrebe 8 vornehmen kann.

Aus Fig. 3 ist ersichtlich, daß die Bimetallfeder 20 mittels einer Nietung 22 mit der Druckstrebe 8 verbunden ist. Ferner ist aus Fig. 3 ersichtlich, daß der den Nachstellnocken 13 lagernde Bolzen 14 einen Fortsatz 23 aufweist, an den die Zugfeder 16 eingreift.

Um die gewünschte rasche Rückstellung der Belagträger 4, 5 zu bewirken, ist ein Werkzeug oder Hebel 26 durch die Öffnung 25 in der Bremsträgerplatte 24 hindurchführbar, mit dessen freiem Ende 27 der Fortsatz 23 entgegen der Kraft der Feder 16 nach rechts, d. h. in Richtung auf den Belagträger 5 zu bewegbar ist. Wird nun der Fortsatz 23 und damit auch der Bolzen 14 im Langloch 15 verschoben, dann springt der Nachstellnocken 13 in seine in Fig. 1 dargestellte Ausgangsstellung zurück, so daß der Abstand a zwischen dem Anschlag 18 und der Berührungslinie des Nachstellnockens 13 mit der Druckstrebe 8 und damit auch der Abstand b, den die beiden Belagträger 4, 5 zueinander aufweisen, schlagartig verringert wird. Nach erfolgter Rückstellung der Belagträger 4, 5 (zu der in Fig. 1 dargestellten Position), läßt sich nun die Bremstrommel 1 problemlos abziehen, wobei irgendwelche Riefen im Bereich der Bremsfläche 28 keinen Einfluß mehr auf das Verschieben der Bremstrommel in Längsrichtung der Radachse haben können.

**Patentansprüche**

1. Vorrichtung zur Nachstellung von Bremsbelägen (2, 3) in einer Reibungsbremse, insbeson-

re einer Kraftfahrzeug-Trommelbremse, bei der die Nachstellung selbsttätig in Abhängigkeit vom Belagverschleiß erfolgt, bei der zwischen den Belagträgern (4, 5) eine Druckstrebe (8) eingesetzt ist, die einerseits federnd gegen einen Belagträger (5) gehalten ist und die andererseits mit Spiel (s) in den anderen Belagträger (4) eingreift und bei der ein durch die Druckstrebe (8) schwenkbarer, von einer Feder (16) beaufschlagter Nachstellnocken (13) vorgesehen ist, durch den die wirksame Länge der Druckstrebe (8) veränderbar ist, dadurch gekennzeichnet, daß der Nachstellnocken (13) auf einem Bolzen (14) gelagert ist, der in einem im Belagträger (4) vorgesehenen, sich parallel zur Längsachse der Druckstrebe (8) erstreckenden Langloch (15) verschiebbar ist, und der auf der der Bremsträgerplatte (24) zugekehrten Seite mit einem den Bolzen (14) verlängernden Fortsatz (23) ausgestattet ist, wobei die Bremsträgerplatte (24) im Bereich des Fortsatzes (23) eine Öffnung (25) aufweist, durch die das Ende eines Hebels (26) mit dem Fortsatz (23) in Eingriff bringbar ist, um eine Rückstellung der Belagträger (4, 5) zu bewirken.

2. Vorrichtung nach Anspruch 1, dadurch gekennzeichnet, daß der Fortsatz (23) und der Hebel (26) einteilig ausgebildet sind und sich der Hebel (26) in einer Ebene quer zur Druckstrebe (8) durch die Öffnung (25) hindurch erstreckt.

3. Vorrichtung nach Anspruch 1, dadurch gekennzeichnet, daß mit dem Fortsatz (23) des Bolzens (14) ein Hebel gelenkig verbunden ist, dessen freies Ende sich durch die Öffnung (25) in der Bremsträgerplatte (24) nach außen zu hindurch erstreckt.

## Claims

1. A device for the adjustment of brake linings (2, 3) of a friction brake, in particular of a motor vehicle drum brake, where adjustment is automatically effected in dependence on the lining wear, where a pressure strut (8) is inserted between the pad carriers (4, 5) which, on the one hand, is resiliently held against one pad carrier (5) and which, on the other hand, engages the other pad carrier (4) with play (s), and where an adjusting cam (13) is provided which may be caused to swing by the pressure strut (8), which is acted upon by a spring (16), and which may vary the effective length of the pressure strut (8), characterized in that the adjusting cam (13) is supported on a bolt (14) which is displaceable in an oblong hole (15) provided in the pad carrier (4) and extending in parallel with the longitudinal axis of the pressure strut (8) and which, on the side facing the brake carrier plate (24), has an extension (23) lengthening the bolt (14), with the brake carrier plate (24) having an opening (25) in the area of the extension (23), through which opening (25) the end of a lever (26) may be brought into engagement with the extension (23) in order to cause resetting of the pad carriers (4, 5).

2. A device as claimed in claim 1, characterized in that the extension (23) and the lever (26) are designed in one piece, the lever (26) extending through the opening (25) on a plane transverse to the pressure strut (8).

3. A device as claimed in claim 1, characterized in that a lever is hinged at the extension (23) of the bolt (14), the free end of said lever extending outwards through the opening (25) in the brake carrier plate (24).

## Revendications

1. Dispositif pour le réglage de mâchoires de frein (2, 3) de frein à friction, en particulier de frein à tambour de véhicule à moteur, dans lequel le réglage est effectué automatiquement en fonction de l'usure des garnitures, comprenant une tige de poussée (8) insérée entre des supports de garnitures (4, 5) laquelle, d'un côté, est maintenue élastiquement contre l'un des supports de garniture (5) et, de l'autre côté, coopère avec l'autre support de garniture (4) avec un certain jeu (5) et dans lequel il est prévu une came de réglage (13) que la tige de poussée (8) est susceptible de faire basculer et sur laquelle agit un ressort (16), came qui peut faire varier la longueur efficace de la tige de poussée (8), caractérisé en ce que la came de réglage (13) est supportée par un axe (14) qui peut se déplacer dans un trou oblong (15), prévu dans le support de garniture (4) et s'étendant parallèlement à l'axe longitudinal de la tige de poussée (8), et qui, du côté faisant face au plateau support de frein (24), possède un prolongement (23) allongeant l'axe (14), le plateau support de frein (24) possédant une ouverture (25) dans la zone de ce prolongement (23) dans laquelle l'extrémité d'un levier (26) peut être amenée en prise avec ce prolongement (23), pour amener en position de retrait les supports de garnitures (4, 5).

2. Dispositif selon la revendication 1, caractérisé en ce que le prolongement (23) et le levier (26) sont conçus en une seule pièce, le levier (26) s'étendant à travers l'ouverture (25) dans un plan transversal par rapport à la tige de poussée (8).

3. Dispositif selon la revendication 1, caractérisé en ce qu'un levier est articulé sur le prolongement (23) de l'axe (14), l'extrémité libre de ce levier s'étendant vers l'extérieur à travers l'ouverture (25) dans le plateau support de frein (24).

FIG. 1

0 123 730

# FIG.2

Ausrückrichtung

# FIG.3